# EUROPÄISCHE PATENTSCHRIFT

(11) **EP 4 235 324 B1**
(45) Veröffentlichungstag und Bekanntmachung des Hinweises auf die Patenterteilung: **23.09.2026**
(21) Anmeldenummer: 22305208.5
(22) Anmeldetag: 24.02.2022
(51) Int. Cl.: G05B 19/05, G06F 9/455, G06F 21/30

(54) **VERFAHREN ZUR STEUERUNG EINER INDUSTRIELLEN ANLAGE**
METHOD FOR CONTROLLING AN INDUSTRIAL INSTALLATION
PROCÉDÉ DE COMMANDE D'UNE INSTALLATION INDUSTRIELLE

(43) Veröffentlichungstag der Anmeldung: 30.08.2023
(73) Patentinhaber: Schneider Electric Industries SAS, 92500 Rueil-Malmaison (FR)
(72) Erfinder: RÖSCH, Ulrich, Triefenstein (DE)
(74) Vertreter: Manitz Finsterwald Patent- und Rechtsanwaltspartnerschaft mbB

(56) Entgegenhaltungen:
- EP-A1- 3 770 704
- WO-A1-2015/034458
- US-A1- 2012 096 271
- US-A1- 2012 265 976
- US-A1- 2016 094 543
- US-A1- 2019 056 970
- US-A1- 2019 068 373
- US-A1- 2019 286 813

## Beschreibung

Die Erfindung betrifft ein Verfahren zur Steuerung einer industriellen Anlage, die eine speicherprogrammierbare Steuerung aufweist und darüber mit einem Cloud-Server in Verbindung steht.

Zum Erzeugen und Konfigurieren einer virtuellen Maschine in einer Cloud sowie zum Verbinden der speicherprogrammierbaren Steuerung mit der virtuellen Maschine bedarf es manueller Arbeit, da die virtuelle Maschine in der Cloud angelegt und konfiguriert werden muss.

Diese Vorgänge sind aufwändig, fehleranfällig und insbesondere dann unpraktikabel, wenn der Cloud-Server mit mehreren industriellen Anlagen an unterschiedlichen Standorten weltweit vernetzt ist.

WO 2015/034458 A1 offenbart ein System und ein Verfahren zum Virtualisieren einer speicherprogrammierbaren Steuerung. Darin stellt ein Endgerät eines Benutzers, etwa ein Desktop-Computer, Laptop, Server, Tablet oder Smartphone, eine Verbindung mit der speicherprogrammierbaren Steuerung her. Anschließend fragt das Endgerät Konfigurationsdaten bei der speicherprogrammierbaren Steuerung an, empfängt und speichert diese Daten. Nachdem die Verbindung zwischen dem Endgerät und der speicherprogrammierbaren Steuerung wieder beendet wurde, wird sodann mittels eines Simulationsprogramms eine Instanz einer virtuellen speicherprogrammierbaren Steuerung auf dem Endgerät angelegt.

Aus US 2019/0068373 A1 ist ein Verfahren zur Authentifikation von mobilen Anwendungen bekannt. Dabei wird beschrieben, dass durch Computer virtuelle Maschinen angelegt, geändert oder gelöscht werden können. Zudem offenbart US 2016/0094543 A1 die Nutzung eines Tokens für den Zugriff eines Clients auf eine virtuelle Maschine.

US 2019/056970 A1 zeigt ein Verfahren zur computergestützten Einbindung eines Verarbeitungsmoduls in ein modulares technisches System, wobei das technische System ein Hostsystem umfasst, das eine virtuelle Maschine mit Echtzeitfähigkeit bereitstellt.

Es ist eine Aufgabe der vorliegenden Erfindung, das Erzeugen und Konfigurieren einer virtuellen Maschine zu vereinfachen und effizienter zu gestalten.

Diese Aufgabe wird durch ein Verfahren nach Anspruch 1 und durch ein System nach Anspruch 8 gelöst. Vorteilhafte Weiterbildungen des Verfahrens sind Gegenstand der abhängigen Ansprüche.

Das erfindungsgemäße Verfahren dient zur Steuerung einer industriellen Anlage, die zumindest eine speicherprogrammierbare Steuerung, abgekürzt "SPS", aufweist. Bei dem Verfahren
- baut die speicherprogrammierbare Steuerung eine Verbindung mit einem Cloud-Server auf,
- führt die speicherprogrammierbare Steuerung ein auf der speicherprogrammierbaren Steuerung laufendes Softwaremodul aus, welches automatisch eine virtuelle Maschine auf dem Cloud-Server erzeugt,
- empfängt das Softwaremodul einen Zugriffstoken und speichert diesen ab,
- verwendet die speicherprogrammierbare Steuerung den Zugriffstoken zum Zugriff auf die virtuelle Maschine und
- arbeitet die speicherprogrammierbare Steuerung mit der virtuellen Maschine zusammen, um Prozessdaten an die virtuelle Maschine zu senden und/oder die Steuerung der industriellen Anlage zu unterstützen, indem die virtuelle Maschine der speicherprogrammierbaren Steuerung rechenaufwändige oder speicherintensive Aufgaben abnimmt.

Die speicherprogrammierbare Steuerung wird auch als "Programmable Logic Controller", abgekürzt "PLC", bezeichnet und kann zum Beispiel Anlagendaten, insbesondere Leistungsdaten, zu der industriellen Anlage an die Cloud übermitteln.

Die industrielle Anlage kann grundsätzlich auch als physische Maschine bezeichnet werden, wobei die virtuelle Maschine (VM) der industriellen Anlage bzw. der physischen Maschine zugeordnet ist. Insbesondere kann der Cloud-Server mit den speicherprogrammierbaren Steuerungen vieler verschiedener industrieller Anlagen verbunden sein, die sich zumindest teilweise an unterschiedlichen Orten weltweit befinden können. Die Verbindung der speicherprogrammierbaren Steuerung zu dem Cloud-Server erfolgt dann via Internet.

Beispielsweise bietet sich das Verfahren für den Betrieb eines Cloud-Servers durch einen Anlagenhersteller und/oder Servicedienstleister an, der über den Cloud-Server Leistungsdaten zu den unterschiedlichen Anlagen abruft und überwacht oder Wartungsdienstleistungen erbringt.

Das Erzeugen der virtuellen Maschine in der Cloud erfolgt erfindungsgemäß somit automatisch durch das Softwaremodul, welches insbesondere auf dem Standard IEC-61131 beruhen kann, ohne dass die virtuelle Maschine manuell angelegt und/oder konfiguriert werden muss. Das Softwaremodul kann in eine Software-Library (z.B. eine Library-Datei) eingebunden sein, sodass das Ausführen der Software stark vereinfacht ist, da der Standard IEC-61131 einen Standard für speicherprogrammierbare Steuerungen darstellt.

Außerdem wird der Zugriffstoken, insbesondere von dem Cloud-Server, automatisch an die speicherprogrammierbare Steuerung übertragen und durch das Softwaremodul in dieser abgespeichert. Das Erzeugen auf dem Cloud-Server und das manuelle Transferieren des Zugriffstokens zu der industriellen Anlage bzw. der speicherprogrammierbaren Steuerung entfällt somit. Bei dem Zugriffstoken kann es sich insbesondere um einen SAS-Token ("Shared Access Signature") handeln, der den Zweck hat, eine Zugriffsberechtigung der speicherprogrammierbaren Steuerung und den Umfang der Zugriffsberechtigung nachzuweisen. Mit dem Zugriffstoken kann also ein Zugriff der speicherprogrammierbaren Steuerung auf die virtuelle Maschine bewerkstelligt werden, sodass die speicherprogrammierbare Steuerung Daten, beispielsweise Leistungsdaten, an die virtuelle Maschine bereitstellen und/oder von dieser abrufen kann.

Die speicherprogrammierbare Steuerung arbeitet mit der virtuellen Maschine über die Verbindung zusammen, um Prozessdaten an die virtuelle Maschine zu senden und/oder die Steuerung der industriellen Anlage zu unterstützen. Zu diesem Zweck kann die virtuelle Maschine der speicherprogrammierbaren Steuerung beispielsweise rechenaufwändige oder speicherintensive Aufgaben abnehmen. Dadurch kann die Steuerung der industriellen Anlage verbessert werden. Zudem kann beispielsweise im Rahmen von Wartungen per Ferndiagnose basierend auf den Leistungsdaten auf die Steuerung der industriellen Anlage eingewirkt werden.

Der Cloud-Server weist eine Cloud für die virtuelle Maschine und eine Verwaltungseinheit auf, die miteinander geschützt kommunizieren und verbunden sind in dem Sinne, dass sie entweder zwei separate Einheiten darstellen, die aber über das Internet miteinander verbunden sind und kommunizieren, oder physisch in einer einzigen Einheit vorgesehen sind. In der Cloud wird die virtuelle Maschine mitsamt zugehörigen Leistungsdaten gespeichert, die insbesondere mit einem Zeitmerkmal (Timestamp) versehen sein können, um die Leistungsdaten einem bestimmten Zeitpunkt zuordnen zu können.

Die Verwaltungseinheit ist vorzugsweise mit einer API (application programming interface) versehen, auf die über einen API-endpoint beispielsweise mittels http und GraphQl-Anfragen und Mutationen oder mittels REST (RESTful-API) zugegriffen werden kann; allerdings ist auch der Einsatz einer anderen API denkbar.

Die Verwaltungseinheit kann beispielsweise dazu dienen, mittels eines Clients und gegebenenfalls über die API die in der Cloud gespeicherten Daten inklusive der Leistungsdaten zu verwalten, auf diese zuzugreifen und diese in einer Benutzeroberfläche des Clients zu visualisieren.

Darüber hinaus kann die Verwaltungseinheit die Erzeugung und Konfiguration der virtuellen Maschine veranlassen. Dazu kann die Verwaltungseinheit mit der Cloud und der speicherprogrammierbaren Steuerung kommunizieren. Insbesondere kann die Verwaltungseinheit von der speicherprogrammierbaren Steuerung die Anforderung erhalten, eine virtuelle Maschine für die speicherprogrammierbare Steuerung zu erzeugen. Die speicherprogrammierbare Steuerung kann dabei der Verwaltungseinheit zumindest eine Grundkonfiguration und/oder Basisanforderungen an die zu erzeugende virtuelle Maschine übermitteln. Beispielsweise kann die Basisanforderung die für die virtuelle Maschine benötigte Zugangskonfiguration, eine gewählte Darstellungsform von Maschinendaten, für die virtuelle Maschine benötigte Rechenleistung und/oder die für die virtuelle Maschine bestimmte Berechnungsaufgabe umfassen. Insbesondere können dann, basierend auf der Grundkonfiguration und/oder der Basisanforderungen, sämtliche zum Erzeugen der virtuellen Maschine erforderlichen Konfigurationsparameter in der Verwaltungseinheit, insbesondere automatisch, erzeugt werden oder über einen Client durch einen Nutzer an der Verwaltungseinheit definiert werden. Die Verwaltungseinheit kann die Grundkonfiguration und/oder die Basiskonfiguration also derart ergänzen, dass die virtuelle Maschine mit sämtlichen benötigten Konfigurationsparametern erzeugt werden kann. Zudem kann die Verwaltungseinheit den Zugriffstoken erzeugen und an die speicherprogrammierbare Steuerung und/oder an die Cloud, d.h. an die neu erzeugte virtuelle Maschine, übermitteln. Die Verwaltungseinheit kann somit auch die speicherprogrammierbare Steuerung von Aufgaben entlasten, welche aus Sicht der speicherprogrammierbaren Steuerung somit im Hintergrund erfolgen.

Das Softwaremodul legt die virtuelle Maschine auf dem Cloud-Server an. Die virtuelle Maschine wird beim Anlegen konfiguriert, wobei die zum Konfigurieren erforderlichen Konfigurationsparameter, wie vorstehend erwähnt, von der speicherprogrammierbaren Steuerung und/oder von der Verwaltungseinheit bereitgestellt werden. Beispielsweise können diese über einen mit der speicherprogrammierbaren Steuerung oder der Verwaltungseinheit verbundenen Client eingestellt werden oder bereits, zumindest teilweise, in der industriellen Anlage bzw. der speicherprogrammierbaren Steuerung vorab gespeichert sein. Beispielsweise kann sich im Rahmen der Inbetriebnahme ein Nutzer an der speicherprogrammierbaren Steuerung über einen Client einloggen und der speicherprogrammierbaren Steuerung mitteilen, ob die virtuelle Maschine vollautomatisch durch die speicherprogrammierbare Steuerung angelegt werden soll. Zusätzlich kann es möglich sein, über den Client mitzuteilen, ob das Anlegen teilweise an die Verwaltungseinheit ausgelagert werden soll, oder ob bestimmte Konfigurationsparameter von der Verwaltungseinheit bezogen werden sollen.

In vorteilhafter Ausgestaltung teilt die Verwaltungseinheit der speicherprogrammierbaren Steuerung und/oder der virtuellen Maschine den Zugriffstoken mit. Insbesondere kann der Zugriffstoken durch die Verwaltungseinheit erzeugt und dann automatisch via Internet an die speicherprogrammierbare Steuerung und/oder die virtuelle Maschine zum Abspeichern übermittelt werden. Der Prozess geschieht vollautomatisch und vermeidet Fehler. Beispielsweise kann das Mitteilen des Zugriffstokens durch die Verwaltungseinheit auf Anfrage der speicherprogrammierbaren Steuerung erfolgen.

Vorzugsweise wird der Zugriffstoken wiederholt, insbesondere regelmäßig, empfangen und abgespeichert. Dieser Prozess kann beispielsweise in bestimmten zeitlichen Abständen ausgelöst werden, indem etwa die speicherprogrammierbare Steuerung zeitgesteuert eine Anfrage an die Verwaltungseinheit sendet, um das Erzeugen und Übermitteln eines neuen Zugriffstokens an die speicherprogrammierbare Steuerung anzustoßen. Alternativ können das Erzeugen und Übermitteln des Zugriffstokens automatisch und selbständig, also ohne jeweilige Anfrage der speicherprogrammierbaren Steuerung, auf der Verwaltungseinheit ausgeführt werden. Die Verwaltungseinheit generiert dann jeweils einen neuen Zugriffstoken für die speicherprogrammierbare Steuerung und teilt diesen der speicherprogrammierbaren Steuerung und/oder der virtuellen Maschine mit. Dies ermöglicht, dass die Gültigkeitsdauer des Zugriffstokens signifikant reduziert wird, da der Prozess des Erneuerns des Zugriffstokens automatisiert und damit erheblich vereinfacht wird. Die Reduktion der Gültigkeitsdauer wiederum wirkt sich positiv auf die Sicherheit aus.

Die Kommunikation zwischen der speicherprogrammierbaren Steuerung und dem Cloud-Server sowie die Verbindung zur API der Verwaltungseinheit erfolgt vorzugsweise verschlüsselt. Insbesondere kann sich TLS ("Transport Layer Security") für die Verschlüsselung der Kommunikation eignen. Beim sogenannten TLS Handshake kann beim Aufbau der Verbindung ein Austausch von Zertifikaten zwischen der speicherprogrammierbaren Steuerung und dem Cloud-Server stattfinden, um die Identität des jeweils anderen Kommunikationspartners zu überprüfen. Dieser Schritt ist grundsätzlich optional, kann aber auch verpflichtend zum Aufbau der Verbindung sein, wenn eine der Komponenten dafür ein Zertifikat verlangt. Die Kommunikation basiert beispielsweise auf HTTPS, wobei X.509-Zertifikate verwendet werden können.

Zum Absichern der Kommunikation, insbesondere mit der Verwaltungseinheit, kann der speicherprogrammierbaren Steuerung außerdem ein Inhaber-Token ("Bearer Token") zugewiesen werden. Der Bearer Token wird beispielsweise während der Inbetriebnahme der industriellen Anlage bzw. der speicherprogrammierbaren Steuerung abgespeichert. Der Bearer Token hat den Zweck, dass die speicherprogrammierbare Steuerung sich bei der Verwaltungseinheit bei wiederholten Verbindungen authentisieren kann und z.B. in der Verwaltungseinheit nur auf die für sie relevanten Daten zugreifen kann. Beim Erneuern des Zugriffstokens kann die Verwaltungseinheit damit auf einfache Weise mit der speicherprogrammierbaren Steuerung eine verschlüsselte Verbindung aufbauen und/oder sicherstellen, dass der Zugriffstoken der richtigen speicherprogrammierbaren Steuerung übermittelt wird. Üblicherweise ist es ausreichend, den Bearer Token einmalig zu erzeugen.

Weiterer Gegenstand der Erfindung ist ein System umfassend eine industrielle Anlage, eine speicherprogrammierbare Steuerung und einen Cloud-Server, welcher eine Cloud für eine virtuelle Maschine und eine Verwaltungseinheit aufweist, wobei
- die speicherprogrammierbare Steuerung ausgebildet ist, eine Verbindung mit dem Cloud-Server aufzubauen,
- die speicherprogrammierbare Steuerung ausgebildet ist, ein auf der speicherprogrammierbaren Steuerung laufendes Softwaremodul auszuführen, welches eine virtuelle Maschine auf dem Cloud-Server automatisch erzeugt, wobei die virtuelle Maschine beim Anlegen konfiguriert wird, und wobei die speicherprogrammierbare Steuerung und/oder die Verwaltungseinheit ausgebildet sind, Konfigurationsparameter für die virtuelle Maschine bereitzustellen,
- das Softwaremodul ausgebildet ist, einen Zugriffstoken zu empfangen und abzuspeichern,
- die speicherprogrammierbare Steuerung ausgebildet ist, den Zugriffstoken zum Zugriff auf die virtuelle Maschine zu verwenden,
- die speicherprogrammierbare Steuerung ausgebildet ist, mit der virtuellen Maschine zusammenzuarbeiten, um Prozessdaten an die virtuelle Maschine zu senden und/oder die Steuerung der industriellen Anlage zu unterstützen, indem die virtuelle Maschine der speicherprogrammierbaren Steuerung rechenaufwändige oder speicherintensive Aufgaben abnimmt.

Für das erfindungsgemäße System gelten die Aussagen zu dem erfindungsgemäßen Verfahren entsprechend. Dies gilt insbesondere hinsichtlich Vorteilen undAusführungsformen. Es versteht sich, dass sämtliche hierin genannten Ausführungsformen untereinander kombinierbar sind, sofern nicht explizit etwas Gegenteiliges angegeben ist.

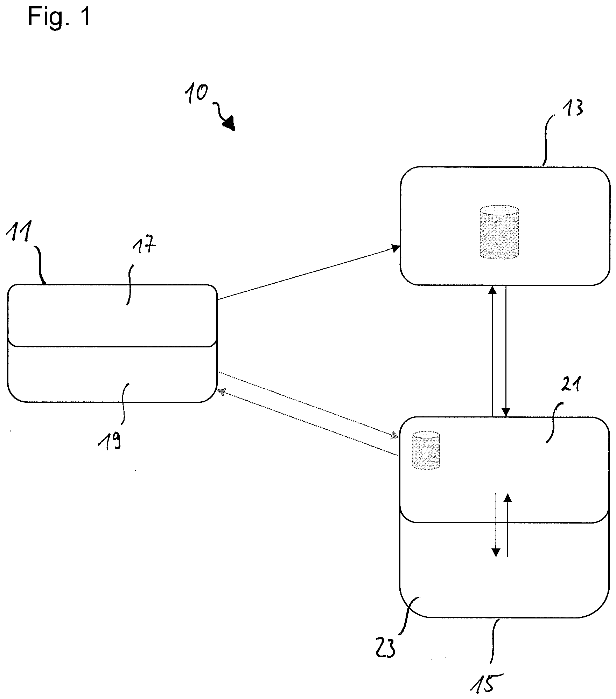

Die Erfindung wird nachfolgend schematisch und beispielhaft anhand einer Zeichnung erläutert. Dabei zeigt
- Fig. 1: eine beispielhafte Architektur eines Netzwerksystems mit einer speicherprogrammierbaren Steuerung und einem Cloud-Server.

Fig. 1 zeigt beispielhaft die Architektur eines Netzwerks 10, welches eine speicherprogrammierbare Steuerung 11 und einen Cloud-Server aufweist, der eine Cloud 13 und eine Verwaltungseinheit 15 umfasst. Die Komponenten sind jeweils ans Internet angebunden und können darüber miteinander geschützt kommunizieren, wobei die Cloud 13 und die Verwaltungseinheit 15 im vorliegenden Beispiel ebenfalls zwei über das Internet miteinander verbundene und miteinander kommunizierende separate Einheiten sind. Alternativ ist aber auch denkbar, dass die Cloud 13 und die Verwaltungseinheit 15 in einer einzigen physischen Einheit vorgesehen sind.

Die speicherprogrammierbare Steuerung 11 ist Teil einer industriellen Anlage (nicht gezeigt) und umfasst ein Gateway 17. Zudem weist die speicherprogrammierbare Steuerung 11 einen IIoT-Client 19 (Industrial Internet of Things) auf. Der IIoT-Client 19 ist ein Softwaremodul, das auf dem IEC-61131-Standard für speicherprogrammierbare Steuerungen beruht und in eine Software-Library eingebunden ist.

Die Verwaltungseinheit 15 weist eine API 21 (Application Programming Interface) auf, über die mit einem Verwaltungsclient 23 Daten abgerufen oder verwaltet werden können. Auf die API 21 wird im vorliegenden Ausführungsbeispiel über einen API-endpoint mittels http und GraphQl-Anfragen und Mutationen zugegriffen.

Bei dem erfindungsgemäßen Verfahren bewirkt ein auf der speicherprogrammierbaren Steuerung 11 laufendes Softwaremodul, welches über den IIoT-Client 19 aufgerufen wird, dass eine virtuelle Maschine auf dem Cloud-Server erzeugt und konfiguriert wird.

Dazu wird von dem IIoT-Client 19 eine entsprechende Anfrage an die **API** 21 gesendet. Die Anfrage kann beispielsweise grundlegende Daten zu der zu erzeugenden virtuellen Maschine enthalten, die der Nutzer mittels des IIoT-Clients 19 zuvor bestimmt hat, etwa eine Bezeichnung, einen Kunden und/oder einen Anlagentyp der industriellen Anlage. Zudem kann der Nutzer an dem IIoT-Client 19 angeben, ob die virtuelle Maschine vollautomatisch durch die speicherprogrammierbare Steuerung 11 angelegt werden soll. Zusätzlich kann es möglich sein, über den IIoT-Client 19 mitzuteilen, ob das Anlegen teilweise oder vollständig an die Verwaltungseinheit 15 ausgelagert werden soll, oder ob bestimmte Konfigurationsparameter für die virtuelle Maschine von der Verwaltungseinheit 15 bezogen werden sollen.

Aufgrund der Anfrage wird die virtuelle Maschine angelegt und automatisch konfiguriert. Zur Konfiguration der virtuellen Maschine wird auf Konfigurationsparameter zugegriffen, die sich beispielsweise aus den im IIoT-Client 19 bestimmten Daten, also im vorliegenden Beispiel Kunde oder Anlagentyp, ergeben.

Sodann wird der speicherprogrammierbaren Steuerung 11 von der Verwaltungseinheit 15 ein Zugriffstoken in Form eins SAS-Tokens (SAS für Shared Access Signatures) mitgeteilt, der dann abgespeichert wird. Mit dem SAS-Token sendet die speicherprogrammierbare Steuerung 11 dann regelmäßig mit einem Zeitstempel versehen Anlagendaten, die insbesondere Aufschluss über die Leistung der industriellen Anlage geben, an die Cloud 13, wo diese gespeichert werden. Anhand des SAS-Tokens kann dabei überprüft werden, ob die speicherprogrammierbare Steuerung 11 die erforderlichen Berechtigungen aufweist, um die Daten in die Cloud zu übermitteln.

Aus Sicherheitsgründen ist es empfehlenswert, den SAS-Token, der ohnehin eine begrenzte Gültigkeit hat, regelmäßig zu erneuern. Das Erneuern und erneute Senden an die speicherprogrammierbare Steuerung 11 erfolgt dann auf Anfrage des IIoT-Clients 19. Grundsätzlich wäre allerdings auch denkbar, den SAS-Token automatisch nach einem bestimmten Zeitablauf zu erneuern, ohne dass es einer Anfrage durch die speicherprogrammierbare Steuerung 11 bedarf.

Die speicherprogrammierbare Steuerung 11 arbeitet außerdem mit der erzeugten virtuellen Maschine zusammen, um die Steuerung der industriellen Anlage zu unterstützen. Beispielsweise können rechenaufwändige oder speicherintensive Aufgaben durch die virtuelle Maschine übernommen werden, um die Steuerung der industriellen Anlage zu verbessern.

Über den Client 23 können dann Daten zu der industriellen Anlage abgerufen und graphisch aufbereitet werden. Dazu werden die Daten bei der Cloud 13 angefragt, mit jeweiligem Zeitstempel an die Verwaltungseinheit 15 gesendet und mittels des Clients 23 zur Ansicht oder Auswertung aufbereitet. Zudem können über den Client 23 Konfigurationsparameter hinzugefügt oder angepasst werden.

Die Kommunikation zwischen der speicherprogrammierbaren Steuerung 11 und dem Cloud-Server sowie zu der API 21 erfolgt verschlüsselt mittels TLS mit Austausch von gegenseitigen Zertifikaten (X.509) beim Aufbau der Verbindung. Die Kommunikation basiert im vorliegenden Beispiel auf HTTPS.

Zum Absichern der Kommunikation wird der speicherprogrammierbaren Steuerung 11 ein "Bearer Token" zugewiesen. Dieser bewirkt außerdem, dass die speicherprogrammierbare Steuerung 11 in der Verwaltungseinheit 15 nur auf die für sie relevanten Daten zugreifen kann. Der Bearer Token wird beispielsweise während der Inbetriebnahme der industriellen Anlage bzw. der speicherprogrammierbaren Steuerung 11 abgespeichert.

### Bezugszeichenliste

- 10: Netzwerk
- 11: speicherprogrammierbare Steuerung
- 13: Cloud
- 15: Verwaltungseinheit
- 17: Gateway
- 19: IIoT-Client
- 21: API
- 23: Verwaltungsclient

## Patentansprüche

1. Verfahren zur Steuerung einer industriellen Anlage mit einer speicherprogrammierbaren Steuerung (11), **dadurch gekennzeichnet, dass**
- die speicherprogrammierbare Steuerung (11) eine Verbindung mit einem Cloud-Server (13, 15) aufbaut, der eine Cloud (13) für eine virtuelle Maschine und eine Verwaltungseinheit (15) aufweist,
- die speicherprogrammierbare Steuerung (11) ein auf der speicherprogrammierbaren Steuerung (11) laufendes Softwaremodul ausführt, welches automatisch eine virtuelle Maschine auf dem Cloud-Server (13, 15) erzeugt,
- das Softwaremodul einen Zugriffstoken empfängt und abspeichert,
- die speicherprogrammierbare Steuerung (11) den Zugriffstoken zum Zugriff auf die virtuelle Maschine verwendet,
- die speicherprogrammierbare Steuerung (11) mit der virtuellen Maschine zusammenarbeitet, um Prozessdaten an die virtuelle Maschine zu senden und/oder die Steuerung der industriellen Anlage zu unterstützen, indem die virtuelle Maschine der speicherprogrammierbaren Steuerung (11) rechenaufwändige oder speicherintensive Aufgaben abnimmt,
wobei die virtuelle Maschine beim Anlegen konfiguriert wird, und wobei die Konfigurationsparameter von der speicherprogrammierbaren Steuerung (11) und/oder von der Verwaltungseinheit (15) bereitgestellt werden.

2. Verfahren nach Anspruch 1,
**dadurch gekennzeichnet, dass** die Verwaltungseinheit (15) der speicherprogrammierbaren Steuerung (11) und/oder der virtuellen Maschine den Zugriffstoken mitteilt.

3. Verfahren nach Anspruch 2,
**dadurch gekennzeichnet, dass** das Mitteilen des Zugriffstokens durch die Verwaltungseinheit (15) auf Anfrage der speicherprogrammierbaren Steuerung (11) erfolgt.

4. Verfahren nach einem der vorstehenden Ansprüche,
**dadurch gekennzeichnet, dass** der Zugriffstoken wiederholt, insbesondere regelmäßig, empfangen und abgespeichert wird.

5. Verfahren nach einem der vorstehenden Ansprüche,
**dadurch gekennzeichnet, dass** die Verwaltungseinheit (15) die Erzeugung und Konfiguration der virtuellen Maschine veranlasst und dazu mit der Cloud und der speicherprogrammierbaren Steuerung (11) kommuniziert, wobei die Verwaltungseinheit (15) von der speicherprogrammierbaren Steuerung (11) die Anforderung erhält, die virtuelle Maschine für die speicherprogrammierbare Steuerung (11) zu erzeugen, wobei die speicherprogrammierbare Steuerung (11) der Verwaltungseinheit (15) zumindest eine Grundkonfiguration und/oder Basisanforderungen an die zu erzeugende virtuelle Maschine übermittelt, wobei basierend auf der Grundkonfiguration und/oder der Basisanforderungen die zum Erzeugen der virtuellen Maschine erforderlichen Konfigurationsparameter in der Verwaltungseinheit (15), insbesondere automatisch, erzeugt werden.

6. Verfahren nach einem der vorstehenden Ansprüche,
**dadurch gekennzeichnet, dass** die Kommunikation zwischen der speicherprogrammierbaren Steuerung (11) und dem Cloud-Server (13, 15) verschlüsselt erfolgt.

7. Verfahren nach einem der vorstehenden Ansprüche,
**dadurch gekennzeichnet, dass** die speicherprogrammierbare Steuerung (11) Anlagendaten zu der industriellen Anlage an die Cloud (13) übermittelt.

8. System, umfassend eine industrielle Anlage, eine speicherprogrammierbare Steuerung (11) und einen Cloud-Server (13, 15), welcher eine Cloud (13) für eine virtuelle Maschine und eine Verwaltungseinheit (15) aufweist, **dadurch gekennzeichnet, dass**
- die speicherprogrammierbare Steuerung (11) ausgebildet ist, eine Verbindung mit dem Cloud-Server (13, 15) aufzubauen,
- die speicherprogrammierbare Steuerung (11) ausgebildet ist, ein auf der speicherprogrammierbaren Steuerung (11) laufendes Softwaremodul auszuführen, welches eine virtuelle Maschine auf dem Cloud-Server (13, 15) automatisch erzeugt, wobei die virtuelle Maschine beim Anlegen konfiguriert wird, und wobei die speicherprogrammierbare Steuerung (11) und/oder die Verwaltungseinheit (15) ausgebildet sind, Konfigurationsparameter für die virtuelle Maschine bereitzustellen,
- das Softwaremodul ausgebildet ist, einen Zugriffstoken zu empfangen und abzuspeichern,
- die speicherprogrammierbare Steuerung (11) ausgebildet ist, den Zugriffstoken zum Zugriff auf die virtuelle Maschine zu verwenden,
- die speicherprogrammierbare Steuerung (11) ausgebildet ist, mit der virtuellen Maschine zusammenzuarbeiten, um Prozessdaten an die virtuelle Maschine zu senden und/oder die Steuerung der industriellen Anlage zu unterstützen, indem die virtuelle Maschine der speicherprogrammierbaren Steuerung (11) rechenaufwändige oder speicherintensive Aufgaben abnimmt.

## Claims

1. A method for controlling an industrial plant comprising a programmable logic controller (11), **characterized in that**
- the programmable logic controller (11) establishes a connection with a cloud server (13, 15) which has a cloud (13) for a virtual machine and a management unit (15),
- the programmable logic controller (11) executes a software module which runs on the programmable logic controller (11) and which automatically generates a virtual machine on the cloud server (13, 15),
- the software module receives and stores an access token,
- the programmable logic controller (11) uses the access token to access the virtual machine,
- the programmable logic controller (11) cooperates with the virtual machine to transmit process data to the virtual machine and/or to support the control of the industrial plant **in that** the virtual machine takes over computationally intensive or memory-intensive tasks from the programmable logic controller (11),
wherein the virtual machine is configured during the creation, and wherein the configuration parameters are provided by the programmable logic controller (11) and/or by the management unit (15).

2. A method in accordance with claim 1,
**characterized in that** the management unit (15) communicates the access token to the programmable logic controller (11) and/or the virtual machine.

3. A method in accordance with claim 2,
**characterized in that** the communication of the access token by the management unit (15) takes place at the request of the programmable logic controller (11).

4. A method in accordance with any one of the preceding claims,
**characterized in that** the access token is received and stored repeatedly, in particular regularly.

5. A method in accordance with any one of the preceding claims,
**characterized in that** the management unit (15) initiates the creation and configuration of the virtual machine and communicates with the cloud and the programmable logic controller (11) for this purpose, wherein the management unit (15) receives the request from the programmable logic controller (11) to create the virtual machine for the programmable logic controller (11), wherein the programmable logic controller (11) transmits at least a basic configuration and/or basic requirements for the virtual machine to be created to the management unit (15), wherein, based on the basic configuration and/or the basic requirements, the configuration parameters required for creating the virtual machine are generated in the management unit (15), in particular automatically.

6. A method in accordance with any one of the preceding claims,
**characterized in that** the communication between the programmable logic controller (11) and the cloud server (13, 15) takes place in encrypted form.

7. A method in accordance with any one of the preceding claims,
**characterized in that** the programmable logic controller (11) transmits plant data about the industrial plant to the cloud (13).

8. A system comprising an industrial plant, a programmable logic controller (11) and a cloud server (13, 15), which has a cloud (13) for a virtual machine and a management (15),
**characterized in that**
- the programmable logic controller (11) is configured to establish a connection with the cloud server (13, 15),
- the programmable logic controller (11) is configured to execute a software module which runs on the programmable logic controller (11) and which automatically generates a virtual machine on the cloud server (13, 15), wherein the virtual machine is configured during the creation, and wherein the programmable logic controller (11) and/or the management unit (15) is/are configured to provide configuration parameters for the virtual machine,
- the software module is configured to receive and to store an access token,
- the programmable logic controller (11) is configured to use the access token to access the virtual machine,
- the programmable logic controller (11) is configured to cooperate with the virtual machine in order to transmit process data to the virtual machine and/or to support the control of the industrial plant **in that** the virtual machine takes over computationally intensive or memory-intensive tasks from the programmable logic controller (11).

## Revendications

1. Procédé de commande d'une installation industrielle avec un automate programmable (11), **caractérisé en ce que**
- l'automate programmable (11) établit une connexion avec un serveur cloud (13, 15) présentant un cloud (13) pour une machine virtuelle et une unité de gestion (15),
- l'automate programmable (11) exécute un module logiciel s'exécutant sur l'automate programmable (11), lequel génère automatiquement une machine virtuelle sur le serveur cloud (13, 15),
- le module logiciel reçoit et stocke un jeton d'accès,
- l'automate programmable (11) utilise le jeton d'accès pour accéder à la machine virtuelle,
- l'automate programmable (11) coopère avec la machine virtuelle afin d'envoyer des données de processus à la machine virtuelle et/ou de soutenir la commande de l'installation industrielle, la machine virtuelle déchargeant l'automate programmable (11) de tâches nécessitant beaucoup de calcul ou de mémoire,
dans lequel la machine virtuelle est configurée lors de sa création, et dans lequel les paramètres de configuration sont fournis par l'automate programmable (11) et/ou par l'unité de gestion (15).

2. Procédé selon la revendication 1,
**caractérisé en ce que** l'unité de gestion (15) communique le jeton d'accès à l'automate programmable (11) et/ou à la machine virtuelle.

3. Procédé selon la revendication 2,
**caractérisé en ce que** la communication du jeton d'accès par l'unité de gestion (15) a lieu sur demande de l'automate programmable (11).

4. Procédé selon l'une des revendications précédentes,
**caractérisé en ce que** le jeton d'accès est reçu et stocké de manière répétée, en particulier régulièrement.

5. Procédé selon l'une des revendications précédentes,
**caractérisé en ce que** l'unité de gestion (15) provoque la génération et la configuration de la machine virtuelle et communique à cette fin avec le cloud et l'automate programmable (11), dans lequel l'unité de gestion (15) reçoit de l'automate programmable (11) la demande de générer la machine virtuelle pour l'automate programmable (11), dans lequel l'automate programmable (11) transmet à l'unité de gestion (15) au moins une configuration de base et/ou des exigences de base concernant la machine virtuelle à générer, dans lequel, sur la base de la configuration de base et/ou des exigences de base, les paramètres de configuration nécessaires à la génération de la machine virtuelle sont générés dans l'unité de gestion (15), en particulier automatiquement.

6. Procédé selon l'une des revendications précédentes,
**caractérisé en ce que** la communication entre l'automate programmable (11) et le serveur cloud (13, 15) est chiffrée.

7. Procédé selon l'une des revendications précédentes,
**caractérisé en ce que** l'automate programmable (11) transmet au cloud (13) des données d'installation relatives à l'installation industrielle.

8. Système, comprenant une installation industrielle, un automate programmable (11) et un serveur cloud (13, 15), présentant un cloud (13) pour une machine virtuelle et une unité de gestion (15), **caractérisé en ce que**
- l'automate programmable (11) est configuré pour établir une connexion avec le serveur cloud (13, 15),
- l'automate programmable (11) est configuré pour exécuter un module logiciel s'exécutant sur l'automate programmable (11), lequel génère automatiquement une machine virtuelle sur le serveur cloud (13, 15), dans lequel la machine virtuelle est configurée lors de sa création, et dans lequel l'automate programmable (11) et/ou l'unité de gestion (15) sont configurés pour fournir des paramètres de configuration pour la machine virtuelle,
- le module logiciel est configuré pour recevoir et stocker un jeton d'accès,
- l'automate programmable (11) est configuré pour utiliser le jeton d'accès pour accéder à la machine virtuelle,
- l'automate programmable (11) est configuré pour coopérer avec la machine virtuelle afin d'envoyer des données de processus à la machine virtuelle et/ou de soutenir la commande de l'installation industrielle, la machine virtuelle déchargeant l'automate programmable (11) de tâches nécessitant beaucoup de calcul ou de mémoire.
